# NEUE EUROPÄISCHE PATENTSCHRIFT

(11) **EP 1 682 398 B2**
(45) Veröffentlichungstag und Bekanntmachung des Hinweises auf die Entscheidung über den Einspruch: **17.11.2010**
(45) Hinweis auf die Patenterteilung: 04.07.2007
(21) Anmeldenummer: 04790328.1
(22) Anmeldetag: 13.10.2004
(51) Int. Cl.: B62D 1/18, F16C 29/04

(54) **TELESKOPIERBARE LENKWELLE**
TELESCOPIC STEERING SHAFT
ARBRE DE DIRECTION TELESCOPIQUE

(30) Priorität: 11.11.2003 DE 20317344 U
(43) Veröffentlichungstag der Anmeldung: 26.07.2006
(73) Patentinhaber: DURA Automotive Systems Reiche GmbH, 32791 Lage (DE)
(72) Erfinder: HARHOFF, Burkhard, 33719 Bielefeld (DE); SCHWARZBICH, Jörg, 33615 Bielefeld (DE)
(74) Vertreter: Dantz, Jan Henning
(86) Internationale Anmeldenummer: PCT/EP2004/011448
(87) Internationale Veröffentlichungsnummer: WO 2005/047077

(56) Entgegenhaltungen:
- WO-A1-98/10960
- DE-C2- 4 217 663
- US-A- 5 737 971

## Beschreibung

Die vorliegende Erfindung betrifft eine teleskopierbare Lenkwelle, insbesondere eine Lenkzwischenwelle, mit einem Innenstab und einem darauf verdrehsicher und mittels einer Wälzlagereinheit längs verschiebbar geführten Außenrohr, wobei die relativ zum Innenstab und Außenrohr axial bewegbare Wälzlagereinheit eine Mehrzahl von in einem Käfig rollbar gehaltenen Wälzkörpern aufweist.

Eine solche Lenkwelle ist beispielsweise aus der DE 38 13 422 A1 bekannt. Der Innenstab sowie das Außenrohr dieser Lenkwelle weisen dabei einen aufeinander abgestimmten Querschnitt auf, vorzugsweise einen polygonen, wodurch sich eine Verdrehsicherung der beiden Teile zueinander ergibt.

US 5 737 971 beschreibt also eine gattungsgemäße Lenkwelle nach dem Oberbegriff des Anspruchs 1.

Durch eine zwischen dem Außenrohr und dem Innenstab angeordnete Wälzlagereinheit sind diese in Längsachsrichtung relativ zueinander verschiebbar. Dabei weist die Wälzlagereinheit zylinderförmige Wälzkörper auf, die sich quer zur Verschieberichtung erstrecken und in einem Käfig abrollbar gelagert sind. Dabei stützen sich die Wälzkörper an einander zugewandten Flächen des Innenstabes bzw. des Außenrohres ab.

Betriebsbedingt unterliegen Lenkwellen einer Torsionsbeanspruchung, wobei die Torsionskräfte durch die Wälzlagereinheit übertragen werden.

Für eine volle Funktionsfähigkeit der Lenkerwelle ist eine dauerhaft gleichbleibende Positionierung der Wälzlagereinheit unabdingbar. Aufgrund der Reibungskräfte bei der relativen Längsverschiebung des Außenrohres auf dem Innenstab kann es zu einem unkontrollierten Fortbewegen der Wälzlagereinheit kommen, bei der deren Verfahrstrecke beim Vorschieben des Außenrohres gegenüber dem Zurückschieben geringfügig unterschiedlich ist. Beim Dauerbetrieb ergibt sich durch die Addition der jeweils auftretenden Streckenunterschiede eine Wanderung der Wälzlagereinheit soweit, dass die Funktionsfähigkeit der Lenkwelle nicht mehr gewährleistet ist.

Gerade unter dem Aspekt, dass Lenkwellen zu den sicherheitsrelevanten Bauteilen eines Kraftfahrzeuges zählen, kommt diesem Verhalten eine besondere Bedeutung zu. Eine befriedigende Lösung des Problems ist bislang nicht gefunden worden, sodass der Erfindung die Aufgabe zugrunde liegt, eine Lenkwelle der gattungsgemäßen Art so weiterzuentwickeln, dass eine unkontrollierte Bewegung der Wälzlagereinheit vermieden und dadurch die Funktionssicherheit der Lenkwelle erhöht wird.

Diese Aufgabe wird durch eine Lenkwelle gelöst, die die Merkmale des Anspruchs 1 aufweist.

Durch diese konstruktive Ausbildung der Lenkwelle erfolgt nun eine Zwangsführung der Wälzlagereinheit, d.h., eine unkontrollierte axiale Bewegung und damit das beschriebene "Wandern" der Wälzlagereinheit ist praktisch ausgeschlossen. Dies gilt sowohl für ein beabsichtigtes Teleskopieren der Lenkwelle auch für durch betriebsbedingte Erschütterungen und Schwingungen sich ergebende Belastungen, die auf die Wälzlagereinheit einwirken und ansonsten zu einer entsprechenden Längsbewegung führen würden.

Der Mitnehmer ist in Form eines Zahnrades ausgebildet, das drehbar in einer Aussparung des Wälzlagerkäfigs gelagert ist und einerseits in einer im Sinne einer Zahnstange ausgebildete Verzahnung des Innenstabes und in eine gleichartige Verzahnung des Außenrohres eingreift, wobei die Verzahnung des Innenstabes an der Außenfläche und die des Außenrohres an der Innenfläche vorgesehen sind.

Wie erwähnt, wird durch den formschlüssigen Eingriff des Mitnehmers in den Innenstab und das Außenrohr einerseits eine zwangsweise Relativbewegung der Wälzlagereinheit zu dem Innenstab bzw. dem Außenstab erreicht, andererseits erfolgt die axiale Relativbewegung des Innenstabes zum Außenrohr durch das Abrollen des als Zahnrad ausgebildeten Mitnehmers sehr leichtgängig, sodass gegenüber einer teleskopierbaren Lenkwelle, die keinen solchen Mitnehmer aufweist, in bezug auf den Funktionsablauf bzw. den Bedienkomfort praktisch kein Unterschied besteht.

Nach einem weiteren Gedanken der Erfindung ist vorgesehen, das Zahnrad als Spritzgussteil aus einem Kunststoff herzustellen, der die notwendige Abriebfestigkeit aufweist, andererseits keine besonderen konstruktiven Maßnahmen zur Lagerung im Wälzlagerkäfig erfordert, der im übrigen sinnvollerweise gleichfalls aus einem Kunststoff besteht.

Eine lose Lagerung des Zahnrades in dem Wälzlagerkäfig erlaubt auch eine einfache Montage der gesamten Lenkwelle, da die einzelnen Teile, also der Innenstab mit aufgeschobener, das Zahnrad aufnehmenden Wälzlagereinheit und das darauf geführte Außenrohr, sehr einfach zusammenzubauen sind.

Auch die Herstellung der Verzahnungen des Innenstabes und des Außenrohres ist denkbar einfach, da hierzu lediglich quer zur Längsachse verlaufende Rillen einzuprägen sind, in die die Zähne des Zahnrades beim Abrollen eingreifen.

Prinzipiell reicht eine relativ einfach gestaltete Ausprägung der die Zähne bildenden Rillen aus. Wichtig ist in der Hauptsache ein gleichmäßiger, auf die Zähne des Zahnrades abgestimmter Abstand der Zahnlücken zueinander.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer teleskopierbaren Lenkwelle in einer perspektivischen Ansicht;

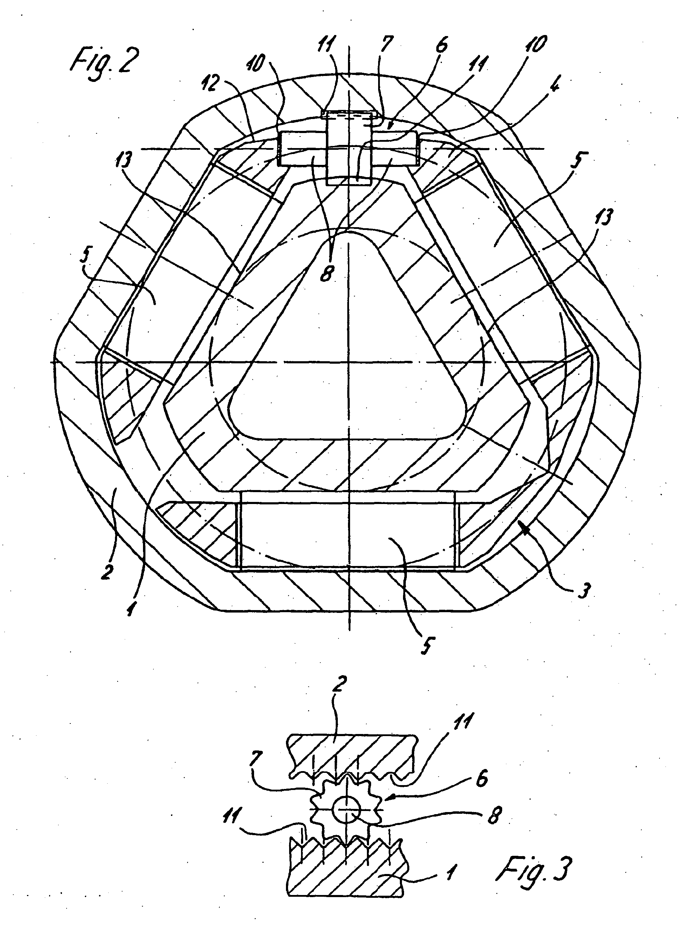

- Figur 2: einen Querschnitt durch die Lenkwelle;
- Figur 3: eine Einzelheit der Lenkwelle in einem Längsschnitt.

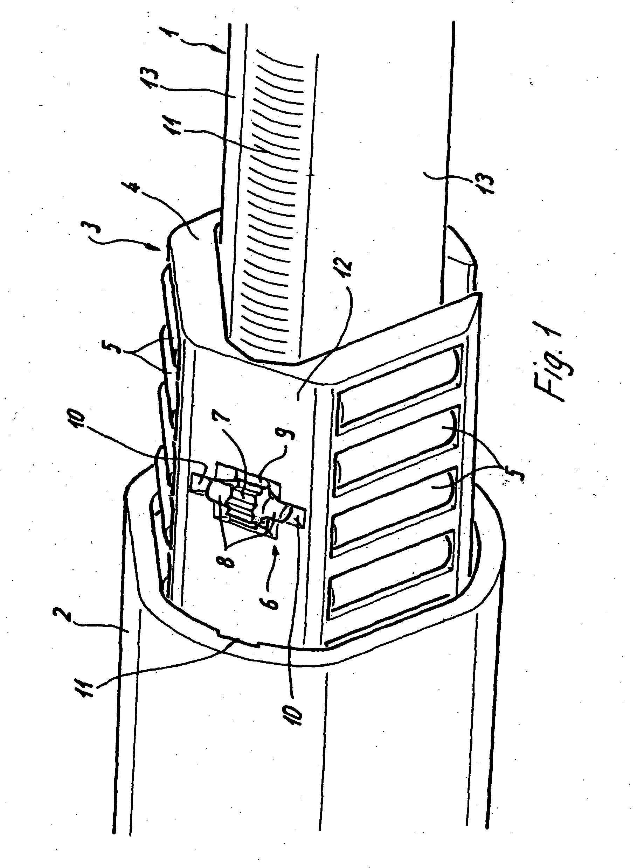

In der Figur 1 ist eine teleskopierbare Lenkwelle, insbesondere eine Lenkzwischenwelle dargestellt, mit einem rohrförmigen Innenstab 1 und einem darauf verdrehsicher und mittels einer Wälzlagereinheit 3 längs verschiebbar geführten Au-ßenrohr 2. Der Innenstab 1, das Außenrohr 2 und die Wälzlagereinheit 3, die einen Wälzlagerkäfig 4 sowie darin gelagerte, in ihrer Drehachse quer zur Verschieberichtung des Innenstabes 1 bzw. des Außenrohres 2 angeordnete Wälzkörper 5 in Form von Wälzlagerrollen aufweist, sind im Querschnitt etwa dreieckförmig ausgebildet.

Zwischen zwei, jeweils die zylinderförmigen Wälzkörper 5 aufnehmenden Seiten des Wälzlagerkäfigs 4 ist in einer ausgebildeten Zwischenfläche 12 ein Mitnehmer 6 vorgesehen, der in Form eines Zahnrades 7 mit beidseitig angeschlossenen Drehzapfen 8 ausgebildet ist.

Mit diesen Drehzapfen 8 ist der Mitnehmer 6 in Zapfenaufnahmen 10 der Zwischenfläche 12 gelagert, die sich an gegenüberliegenden Seiten einer Ausnehmung 9 anschließen, die von dem Zahnrad 7 vollständig durchtreten wird, d.h., die Ausnehmung 9 bildet in diesem Bereich ein Fenster.

Der Durchmesser des Zahnrades 7 ist dabei größer als die Dicke des Wälzlagerkäfigs 4 in diesem Bereich, sodass die Zähne des Zahnrades 7 ober- und unterseitig über die Zwischenfläche 12 hinausragen.

Um einen Formschluss zwischen der Wälzlagereinheit 3, dem Innenstab 1 sowie dem Außenrohr 2 herzustellen, weist der Innenstab 1 auf seiner der Zwischenfläche 12 zugewandten Seite, an die sich beidseitig jeweils eine Lauffläche 13 anschließt, eine Verzahnung 11 auf, die durch Rillen gebildet wird, die in gleichem Abstand zueinander quer zur Längsachsrichtung des Innenstabes 1 verlaufen und in die die Zähne des Zahnrades 7 eingreifen.

In diesem Sinne ist auch das Außenrohr 2 mit einer Verzahnung 11 ausgestattet, die an der Innenseite des Außenrohres 2 vorgesehen ist und in die die Zähne des Zahnrades 7 eingreifen.

Durch den so hergestellten Formschluss bewegt sich die Wälzlagereinheit 3 bei einer Relativbewegung des Innenstabes 1 zum Außenrohr 2 beim Hin- und Herfahren genau proportional der Längsverschiebung des Innenstabes 1 und des Außenrohres 2. Ein Wandern, wie zum Stand der Technik beschrieben, ist ausgeschlossen.

## Patentansprüche

1. Teleskopierbare Lenkwelle, insbesondere Lenkzwischenwelle, mit einem Innenstab (1) und einem darauf verdrehsicher und mittels einer Wälzlagereinheit (3) längsverschiebbar geführten Außenrohr (2), wobei die relativ zum Innenstab (1) und Außenrohr (2) axial bewegbare Wälzlagereinheit (3) eine Mehrzahl von in einem Wälzlagerkäfig (4) abrollbar gehaltenen Wälzlagerkörpern (5) aufweist, **dadurch gekennzeichnet, dass** im Wälzlagerkäfig (4) mindestens ein Mitnehmer (6) in Form eines Zahnrades (7) gelagert ist, dessen Zähne formschlüssig in eine Verzahnung (11) in das Wandung des Innenstabes (1) und in eine Verzahnung (11) des Außenrohres (2) eingreifen, wobei die Zähne der Verzahnungen (11) durch quer zur Längsachse des Innenstabes (1) und des Außenrohres (2) verlaufende, eingeprägte Rillen gebildet sind, und
der Mitnehmer (6) mittels mit dem Zahnrad (7) verbundener Lagerzapfen (8) drehbar in dem Wälzlagerkäfig (4) gelagert ist, wobei zur Aufnahme der Lagerzapfen (8) Zapfenaufnahmen (10) im Lagerkäfig (4) vorgesehen sind.

2. Lenkwelle nach Anspruch 1, **dadurch gekennzeichnet, dass** in dem Wälzlagerkäfig (4) eine Ausnehmung (9) in Form eines Fensters vorgesehen ist, aus der beidseitig das Zahnrad (7) herausragt.

3. Lenkwelle nach Anspruch 1 oder 2, **dadurch gekennzeichnet, dass** die Verzahnungen (11) des Innenstabes (1) und des Außenrohres (2) aus Rillen gebildet sind, die quer zur Längsachsrichtung des Innenstabes (1) bzw. des Außenrohres (2) verlaufen und entsprechend der Zahnteilung des Zahnrades (7) abständig zueinander angeordnet sind.

4. Lenkwelle nach einem der vorhergehenden Ansprüche, **dadurch gekennzeichnet, dass** der Mitnehmer (6) aus einem Kunststoffspritzgussteil besteht.

## Claims

1. Telescopic steering shaft, in particular intermediate steering shaft, having an inner rod (1) and an outer tube (2) which is guided such that it cannot rotate on the former and longitudinally displaceably by means of a roller bearing unit (3), the roller bearing unit (3) which can move axially relative to the inner rod (1) and the outer tube (2) having a multiplicity of roller bearing elements (5) which are held in a roller bearing cage (4) such that they can roll, **characterized in that** at least a driver (6) which is mounted in the roller bearing cage (4), having the form of a gearwheel, the teeth of which engage into a toothing system (11) of the wall of the inner rod (1) and into a toothing system of the outer tube (2) in a form-fitting manner, wherein the teeth of the toothing system (11) are formed by grooves being stamped transverse to the longitudinal axis of the inner rod (1) and the outer tube (2) and wherin the driver (6) is mounted rotatably in the roller bearing cage (4) by means of bearing journals (8) which are connected to the gearwheel (7) and wherin the journal receptacles (10) are provided in the nearing cage (4) in order to receive the bearing journals (8).

2. Steering shaft according to claim 1, **characterized in that** a recess (9) in the form of a window is provided in the roller bearing cage (4), from which recess (9) the gearwheel (7) protrudes on both sides.

3. Steering shaft according to Claim 1 or 2, **characterized in that** the toothing systems (11) of the inner rod (1) and the outer tube (2) are formed from grooves which run transversely with respect to the longitudinal axial direction of the inner rod (1) and of the outer tube (2) and are arranged at a spacing of the gearwheel (7).

4. Steering shaft according to one of the preceding claims, **characterized in that** the driver (6) comprises a plastic injection-moulded part.

## Revendications

1. Arbe de direction téléscopique, en particulier arbre intermédiaire de direction, comprenant une tige intérieure (1) et une tube extérieur (2) monté sur celui-ci en étant bloqué en rotation et déplaçable axialement par rapport à la tige intérieure (1) et au tube extérieur (2) présentant une pluralité de corps formant paliers à roulement (5) susceptibles de rouler dans une cage de palier à roulement (4) **caractérisé en ce qu'**est monté dans la cage de palier à roulement (4) au moins un tenon d'entraînement (6), en forme d'une roue dentée (7), dont des dents de la roue dentée pénètre par complémentarité de formes dans une denture (11) de la paroi de la tige intérieure (1) et dans une denture (11) de la paroi du tube extérieur (2) où les dents de la denture (11) sont formé par des rainures estampé transversale à l'axe longitudinal de la tige intérieure (1) et la tube extérieur (2) et que le tenon d'entraînement (6) est monté tournant dans la cage de palier à roulement (4), au moyen de tourillons (8) reliés à la roue dentée et que des évidements pour tourillons (10) sont prévus dans la cage de roulement (4) pour recevoir les tourillons (8).

2. Arbre de direction selon la revendication 1, **caractérisé en ce qu'**est prevu, dans la cage de palier à roulement (4), un évidement (9) en forme de fenêtre, duquel la roue dentée (7) dépasse des deux côtés.

3. Arbre de direction selon la revendication 1 ou 2, **caractérisé en ce que** les dentures (11) de la tige intérieure (1) et du tube extérieur (2) sont constituées par des stries s' étendant perpendiculairement à la direction de l'axe longitudinal de la tige intérieure (1) et/ou du tube extérieur (2) et disposées avec un écartement, les unes par rapport aux autres, qui correspond au pas de denture de la roue denteé (7).

4. Arbre de direction selon l'une des revendications précédentes, **caractérisé en ce que** le tenon d'entraînement (6) est constitué par une pièce en matière synthétique moulée par injection.
